# EUROPEAN PATENT APPLICATION

(11) **EP 4 366 118 A1**
(43) Date of publication of application: **08.05.2024**
(21) Application number: 22932534.5
(22) Date of filing: 21.03.2022
(51) Int. Cl.: H02J 7/00

(54) **BATTERY SYSTEM CONTROL METHOD AND CONTROL DEVICE, AND BATTERY SYSTEM**

(71) Applicant: Contemporary Amperex Technology Co., Limited, Ningde, Fujian 352100 (CN)
(72) Inventor: CHEN, Xinwei, Ningde, Fujian 352100 (CN); CAI, Jinbo, Ningde, Fujian 352100 (CN); GAO, Jinfeng, Ningde, Fujian 352100 (CN)
(74) Representative: Behr, Wolfgang
(86) International application number: PCT/CN2022/081895
(87) International publication number: WO 2023/178463

(57) **Abstract**

Embodiments of the present application disclose a control method for a battery system, device, and a battery system, the method comprising: determining that a state of charge (SOC) and a current of a first battery cluster in N battery clusters meet a first preset condition, the first preset condition including: the SOC of the first battery cluster is greater than a first threshold and the current of the first battery cluster is greater than a second threshold or less than a third threshold, or, the SOC of the first battery cluster is less than a fourth threshold and the current of the first battery cluster is greater than the second threshold or less than the third threshold, wherein the second threshold is set according to a maximum permissible current of the first battery cluster, and the third threshold is set according to an average current of the N battery clusters; and sending first information to a first DCDC converter connected in series with the first battery cluster, the first information being used to instruct controlling the current of the first battery cluster to reach a first preset current. According to the method provided in the present application, a loop current between battery clusters can be used, the capacity of battery clusters at the end of charge/discharge can be fully used, and the capacity utilization can be improved.

## Description

### Technical Field

The present application relates to the field of batteries, and more specifically, to a control method and control device for a battery system, and a battery system.

### Background

In recent years, batteries have been widely used in many fields such as power tools, electric bicycles, electric motorcycles, electric vehicles, military equipment, aerospace, and the like, so that great development is achieved. In a battery energy storage system, a battery with large capacity is required as a power supply system. Therefore, a plurality of batteries are usually connected in parallel or in series to form a battery cluster, and then a plurality of battery clusters are connected in parallel to form a battery system for supplying power as an energy storage system.

Due to differences of state of charge (SOC), voltage and current between battery clusters that are connected in parallel, a loop current is generated between the battery clusters, and due to the loop current between the battery clusters, the battery cluster with a high voltage will charge the battery cluster with a low voltage, so that this part of capacity cannot be utilized, which eventually results in a waste of capacity of the battery system and affecting the stability of the battery system power supply. Therefore, how to make full use of the capacity of a battery system is a problem to be solved.

### Summary of the Invention

Embodiments of the present application provide a control method and control device for a battery system, and a battery system. The method can utilize loop current between battery clusters, so that the remaining capacity of battery clusters at the end of charge/discharge can be utilized as much as possible, thereby improving capacity utilization of a battery system.

In a first aspect, a control method for a battery system is provided, the battery system includes N battery clusters that are connected in parallel, and each of the battery clusters has a direct current-direct current converter (DCDC converter) connected in series therewith. The method includes: determining that a state of charge (SOC) and a current of a first battery cluster in the N battery clusters meet a first preset condition, where the first preset condition includes: the SOC of the first battery cluster is greater than a first threshold and the current of the first battery cluster is greater than a second threshold or less than a third threshold; or, the SOC of the first battery cluster is less than a fourth threshold and the current of the first battery cluster is greater than the second threshold or less than the third threshold, wherein the second threshold is set according to a maximum permissible current of the first battery cluster, and the third threshold is set according to an average current of the N battery clusters; and sending first information to a first DCDC converter connected in series with the first battery cluster, the first information being used to instruct controlling the current of the first battery cluster to reach a first preset current.

In the embodiment of the present application, after determining that the first battery cluster in the battery system meets the first preset condition, the first information is sent to the first DCDC converter, instructing the first DCDC converter to adjust the current of the first battery cluster. Meeting the first preset condition means that the first battery cluster reaches the end of charge/discharge and the current is abnormal, at this time, a loop current between the battery clusters is inevitable. At the end of charge/discharge of the battery clusters, the loop current between the battery clusters can be utilized, so that the battery cluster with a high voltage charges the battery cluster with a low voltage, so that the SOCs between different battery clusters tends to be equalized. By controlling the current of the first battery cluster to reach the preset value, the first battery cluster can be prevented from reaching the cut-off condition prematurely and being disconnected, so that the power supply time of the first battery cluster and another battery clusters in the battery system is prolonged, and the capacity of the battery system at the end of charge/discharge of the battery cluster is fully utilized, thereby improving the capacity utilization of the battery system.

In some embodiments, before sending the first information to the first DCDC converter connected in series with the first battery cluster, the method further includes: sending, starting from the first DCDC converter, state switching instructions to the N DCDC converters in the battery system in sequence, the state switching instructions being used to instruct controlling the N electronic control switches respectively connected in parallel with the N DCDC converters to be turned off.

In the embodiment of the present application, after determining that the first battery cluster meets the first preset condition, a state switching instruction is sent, starting from the first DCDC converter, to each of the DCDC converters in the battery system in sequence. On one hand, before adjusting the current of the first battery cluster, connecting all the DCDC converters in the battery system to the circuit enables the DCDC converters in the circuit receive and respond to the current instructions or the voltage instructions in time, which helps to adjust the currents of the battery clusters meeting the first preset condition in the battery system in time; on the other hand, controlling the DCDC converters to be sequentially connected to the circuit helps to alleviate circuit oscillation caused by connecting a plurality of DCDC converters to the circuit at the same time, and helps to improve stability of the battery system.

In some embodiments, before sending the first information to the first DCDC converter connected in series with the first battery cluster, the method further includes: confirming that all of the N electronic control switches in the battery system are turned off.

In the embodiment of the present application, sending the first information to the first battery cluster after confirming all the DCDC converters in the battery system are connected to circuit, which helps to reduce the conflict between the first information and the state switching instructions, thereby improving the stability of the battery system in terms of software.

In some embodiments, before sending the first information to the first DCDC converter connected in series with the first battery cluster, the method further includes: sending, starting from the first DCDC converter, current instructions or voltage instructions to the N DCDC converters in the battery system in sequence, the current instructions being used to indicate target currents of the N battery clusters corresponding to the N DCDC converters, and the voltage instructions being used to indicate target voltages of the N battery clusters corresponding to the N DCDC converters.

In the embodiment of the present application, after determining that the first battery cluster meets the first preset condition, in addition to the state switching instructions, the current instructions or the voltage instructions are sequentially sent to the DCDC converters in the battery system, so that after being connected to the circuit, the DCDC converters in the battery system control the currents or voltages of corresponding battery clusters according to the target current or the target voltage, for example, maintain the current voltages or currents of the battery clusters. In this way, before adjusting and utilizing the loop current between battery clusters of the battery system, it is ensured that each battery cluster is in a stable and adjustable state, thereby ensuring that subsequent current adjustment step can be performed normally.

In some embodiments, the method further includes: determining that a current of a second battery cluster in the N battery clusters meets a second preset condition, where the second preset condition includes: a ratio of the current of the second battery cluster to the average current of the N battery clusters is less than a fifth threshold, or, a ratio of the current of the second battery cluster to the average current of the N battery clusters is greater than a sixth threshold; and sending second information to a second DCDC converter connected in series with the second battery cluster, the second information being used to instruct controlling the current of the second battery cluster to reach a second preset current.

In the embodiment of the present application, when the difference between the current of the second battery cluster and the average current of the battery clusters in the battery system is greater than a certain threshold, the second information is sent to the second DCDC converter to adjust the current of the second battery cluster. By monitoring and adjusting the difference between the current of each battery cluster in the battery system and the average current in time, it can effectively avoid the situation that a battery cluster reaches the cut-off condition prematurely due to the current difference between each battery cluster in the battery system being too large, and make full use of the SOC equalization caused by the loop current between the battery clusters at the end of charge/discharge, so as to prolong the overall power supply time of the battery clusters, and improve the capacity utilization of the battery system.

In some embodiments, the method further includes: determining that a current of a third battery cluster in the N battery clusters meets a third preset condition, where the third preset condition includes: the current of the third battery cluster is greater than a seventh threshold, wherein the seventh threshold is set according to a maximum permissible current of the third battery cluster, a maximum charging current of the third battery cluster, or a maximum discharging current of the third battery cluster; and sending third information to a third DCDC converter connected in series with the third battery cluster, the third information being used to instruct controlling the current of the third battery cluster to reach a third preset current.

In the embodiment of the present application, when the current of the third battery cluster in the battery system is greater than a certain threshold, the third information is sent to the third DCDC converter to adjust the current of the third battery cluster. By monitoring the current of each battery cluster in the battery system in time, and adjusting the current in time when it is greater than a certain threshold, it can be effectively avoided the situation that a battery cluster in the battery system reaches the cut-off condition at the end of charging/discharging due to the current of the battery cluster being too large, thereby further improving the capacity utilization of the battery system.

In some embodiments, the sending state switching instructions to the N DCDC converters in the battery system in sequence includes: sending the state switching instructions to the corresponding N DCDC converters in the battery system in sequence in an ascending order according to current magnitudes of the N battery clusters.

In some embodiments, the sending state switching instructions to the N DCDC converters in the battery system in sequence includes: sending the state switching instructions to the corresponding N DCDC converters in the battery system in sequence in a descending order according to the current magnitudes of the N battery clusters.

In the embodiment of the present application, by sequentially connecting corresponding DCDC converters to the circuit in an ascending order or a descending order according to the current magnitudes of the battery clusters in the battery system, so that in the battery system, a battery cluster with the current thereof closer to the cut-off condition can be preferentially connected to a DCDC converter so as to being regulated by the DCDC converter, and the remaining battery clusters may continue charging/discharging for a period of time before being connected to DCDC converters, thereby making full use of the charge/discharge capacity of the battery clusters, and improving the capacity utilization of the battery system.

In some embodiments, the sending current instructions or voltage instructions to the N DCDC converters in the battery system in sequence includes: sending the current instructions or the voltage instructions to the corresponding N DCDC converters in the battery system in sequence in an ascending order according to current magnitudes of the N battery clusters.

In some embodiments, the sending current instructions or voltage instructions to the N DCDC converters in the battery system in sequence includes: sending the current instructions or the voltage instructions to the corresponding N DCDC converters in the battery system in sequence in a descending order according to the current magnitudes of the N battery clusters.

In the embodiment of the present application, by sequentially sending the current or the voltage instructions to the corresponding DCDC converters in an ascending order or a descending order according to current magnitudes of the battery clusters in the battery system, so that in the battery system, a battery cluster with the current thereof closer to the cut-off condition can be preferentially subj ected to the current or the voltage regulation by a DCDC converter, and the remaining battery clusters may continue charging/discharging for a period of time before being regulated by DCDC converters, thereby making full use of the charge/discharge capacity of the battery clusters, and improving the capacity utilization of the battery system.

In some embodiments, the battery system further includes a state acquisition unit, and the method further includes: receiving SOCs and currents of the N battery clusters sent by the state acquisition unit.

In a second aspect, a control device for a battery system is provided, the control device for a battery system includes: a processor and a memory that stores computer program instructions; the processor, when executing the computer program instructions, implements the control method of the battery system according to any one of the embodiments of the first aspect.

In a third aspect, a battery system is provided, the battery system includes: N battery clusters connected in parallel, a DCDC converter connected in series with each of the battery clusters, and a control device; the control device is configured to perform the control method for a battery system according to any one of the embodiments of the first aspect.

In a fourth aspect, a computer storage medium is provided, the computer storage medium stores computer program instructions, and when the computer program instructions are executed, the control method for a battery system according to any one of the embodiments of the first aspect is implemented.

### Description of Drawings

In order to illustrate the technical solutions of the embodiments of the present application more clearly, the drawings required in the embodiments of the present application will be briefly introduced below. Obviously, the drawings described below are only some embodiments of the present application. For those of ordinary skill in the art, other drawings can also be obtained according to the drawings without any creative effort.
Fig. 1 is a schematic structural diagram of a battery system according to an embodiment of the present application;
Fig. 2 is another schematic structural diagram of a battery system according to an embodiment of the present application;
Fig. 3 is a schematic diagram of a charging/discharging curve according to an embodiment of the present application;
Fig. 4 is a schematic flowchart of a control method for a battery system according to an embodiment of the present application;
Fig. 5 is another schematic flowchart of a control method for a battery system according to an embodiment of the present application;
Fig. 6 is a schematic structural diagram of a control device for a battery system according to an embodiment of the present application.

### Detailed Description

The implementations of the present application will be further described in detail below with reference to the drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second", "third", and the like are used for descriptive purposes only and cannot be understood as indicating or implying relative importance. "Perpendicular" is not perpendicular in the strict sense, but within the permissible range of error. "Parallel" is not parallel in the strict sense, but within the permissible range of error.

The orientation words appearing in the following description are all the directions shown in the figures, and are not intended to limit the specific structure of the present application. In the description of the present application, it should be noted that the terms "mounting", "connecting", "connection" should be understood in a broad sense, unless otherwise explicitly specified or defined. For example, it may be a fixed connection, a detachable connection, or an integrated connection; and it may be a direct connection or an indirect connection through an intermediate medium. For those of ordinary skill in the art, the specific meanings of the above terms in the present application may be understood according to specific circumstances.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

Unless otherwise defined, all technical and scientific terms used herein have the same meaning as commonly understood by those skilled in the art belonging to the technical field of the present application; the terms used in the specification of the present application are intended only for the purpose of describing specific examples and are not intended to limit the present application; the terms "including" and "having" and any variations thereof in the specification and the claims of the present application and in the description of drawings above are intended to cover non-exclusive inclusion. The terms "first", "second", and the like in the specification and claims of the present application or the above accompanying drawings are used to distinguish different objects, but not to describe a specific order or primary and secondary relationship.

In the present application, reference to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In order to use batteries as an energy storage system, batteries are typically connected in parallel or in series to form a battery cluster, then the battery clusters are connected in parallel to form a battery system for use as an energy storage system, for example, connecting a battery system to a power grid to meet the requirements of regulation and distribution of power by the power grid. In a battery system in which battery clusters are connected in parallel, since performance parameters such as internal resistance of the batteries cannot be exactly the same, the terminal voltages of different battery clusters are different, so that a loop current is likely to be generated between the battery clusters, that is, a current flows from a battery cluster with high electromotive force to a battery cluster with low electromotive force, and the battery cluster with high state of charge (SOC) charges the battery cluster with low SOC.

During the charging/discharging process of the battery, firstly, excessive loop current may exceed the limit that the battery or the circuit can withstand, thereby causing irreversible damage to the battery or the circuit; secondly, the loop current may cause internal consumption of battery capacity in the circuit, so that it is unable to supply power to the outside, which affects the capacity utilization of the battery system. Therefore, in a charging/discharging plateau region of the battery, that is, the region in which the current or the voltage remains stable during the charging/discharging process of a battery, the SOC of each battery cluster is usually monitored and adjusted so as to slow down or avoid generation of a loop current between clusters. Adjusting the SOCs of battery clusters can not only suppress the generation of a loop current but also improve the capacity utilization of the battery system. For example, during the discharging process, if the SOC of a battery cluster is too small, the battery cluster will empty the capacity thereof prematurely compared with other battery clusters with higher SOCs, and reach the cut-off condition prematurely, and then being disconnected and quit the power supply system. This makes the battery system have to send a power reduction request to the power grid although other battery clusters with higher SOCs are still able to supply power normally, which seriously reducing the constant power operation performance of the battery system. If the battery cluster with a small SOC is adjusted during the charging/discharging phase, the difference between SOCs of the battery clusters is reduced, which can effectively prevent the battery cluster with a small SOC from reaching the cut-off condition prematurely, so that the battery clusters in the battery system can reach the cut-off condition as simultaneously as possible, thereby increasing the time of constant power supply of the battery system and improving the capacity utilization of the battery.

In actual production and life, when adjusting the SOC of a battery cluster, due to the influence of some intrinsic properties of the battery such as cell material, there is always an error between the calculated value of SOC and the real value of SOC, resulting in the strategy of improving the capacity utilization based on adjusting the SOC of a battery cluster to fail, and there is a lack of strategy that can use this part of the battery capacity in the non-plateau region at the end of charge/discharge, i.e., the region where the current or voltage changes rapidly.

In view of this, the present application provides a control method and control device for a battery system, and a computer storage medium. The method can effectively utilize the battery capacity in the non-plateau region at the end of charge/discharge, by utilizing and controlling the loop current between battery clusters, the SOCs of different battery clusters tends to be equalized at the end of charge/discharge, thereby improving capacity utilization of the battery system.

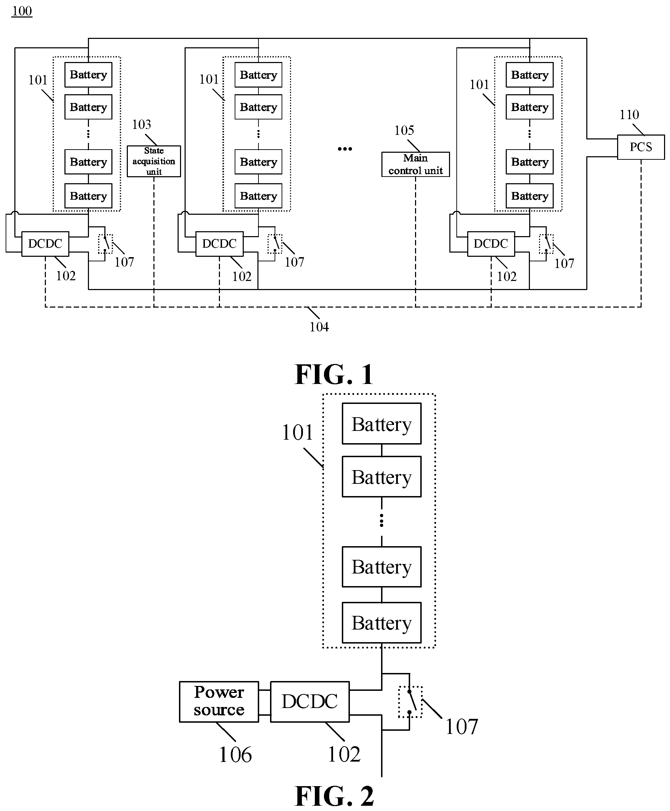

Fig. 1 is a schematic structural diagram of a battery system to which an embodiment of the present application is applicable.

As shown in Fig. 1, the battery system 100 may include N battery clusters 101 connected in parallel, and N direct current-direct current converters (DCDC converters) 102, each battery cluster 101 is connected in series with a DCDC converter 102, and each battery cluster 101 is composed of several batteries connected in parallel or in series. Taking one battery cluster 101 as an example, one end of the DCDC converter 102 is connected in series with a battery cluster 101 through a wire, and the other end of the DCDC converter 102 is connected in parallel with the battery cluster 101 through a wire, so that the DCDC converter 102 is capable of adjusting the voltage of the battery cluster 101 connected in series therewith, and thereby adjusting the current of the battery cluster 101. N is a positive integer greater than or equal to 2.

Optionally, one end of the DCDC converter 102 may be connected in series to the positive electrode or the negative electrode of the battery cluster 101, or may be connected in series at any position among several batteries of the battery cluster 101. The embodiments of the present application do not specifically limit the serial connection position between the DCDC converter 102 and the battery cluster 101.

Specifically, in terms of type of the battery, the battery in the battery cluster 101 may be any type of battery, including but not limited to: lithium-ion battery, lithium metal battery, lithium sulfur battery, lead acid battery, nickel cadmium battery, nickel metal hydride battery, or lithium air battery and the like. In terms of battery scale, the battery in the embodiment of the present application may be a cell/battery cell, may also be a battery module or a battery pack, in the embodiments of the present application, the specific type and scale of the battery are not specifically limited.

Optionally, the battery system 100 may be a normal charging pile, a super charging pile, a charging pile supporting a vehicle to grid (V2G) mode, or the like. The specific application scenario of the battery system 101 is not limited in the embodiments of the present application.

Optionally, as shown in Fig. 1, the battery system 100 further includes a state acquisition unit 103, the state acquisition unit 103 is connected with the DCDC converter 102 through a communication line 104, wherein the communication line 140 is used to implement information interaction between the state acquisition unit 103 and the DCDC converter 102. In addition, there may be one or more status acquisition units 103. The quantity of status acquisition unit 103 is not specifically limited in the embodiments of the present application. The state acquisition unit 103 can collect state information such as current, voltage, and SOC of the battery cluster 101.

As an example, the communication line 140 includes but not limited to a control area network (CAN) communication bus or a daisy chain communication bus.

Optionally, as shown in Fig. 1, the battery system 100 includes a main control unit 105, the main control unit 105 is connected with the state acquisition unit 103 through the communication line 104. In addition, the main control unit 105 may also be connected with the DCDC converter 102 through the communication line 104.

Optionally, in addition to communicating with the DCDC converter 102 through the communication line 104, the state acquisition unit 103 may also communicate with the DCDC converter 102 through a wireless network, Bluetooth, or the like. The connection manner of the main control unit 105 is similar and will not be described again. The wired communication type or the wireless communication type is not specifically limited in the embodiments of the present application.

Optionally, as shown in Fig. 1, the battery system 100 may further be connected with a power conversion system (PCS) 110, the PCS 110 includes a direct current-alternating current converter (DC/AC converter), configured to regulate the charging/discharging process of the battery system 100 and perform alternating current-direct current conversion, and supply power to an AC load when there is no power grid. Optionally, the position of the PCS 110 may alternatively be a load or a bus DCDC converter, that is, the battery system 100 may further be directly connected with a load or a bus DCDC converter. The specific connection object at the PCS 110 of the battery system 100 is not limited in the embodiments of the present application.

Fig. 2 shows another structural diagram related to a battery cluster 101 in a battery system 100 according to an embodiment of the present application.

As shown in Fig. 2, optionally, one end of the DCDC converter 102 is connected in series with a battery cluster 101 through a wire, and the other end of the DCDC converter 102 is connected in parallel with a power source 106. The power source 106 may be an independent battery, a super capacitor, a direct current bus, or the like, and is used to supply power to the DCDC converter 102. This is not specifically limited in the embodiments of the present application.

Optionally, the DCDC converter 102 may be an isolated DCDC converter, or may be a non-isolated DCDC converter.

Optionally, the end of the DCDC converter 102 connected in series with the battery cluster 101 is further connected in parallel with an electronic control switch 107. When the electronic control switch 107 is turned off, the DCDC converter 102 is connected to the circuit, being connected in series with the battery cluster 101 and adjusting the voltage or current of the battery cluster 101; and when the electronic control switch 107 is turned on, the DCDC converter 102 is short-circuited, and the DCDC converter 102 is in a bypass state.

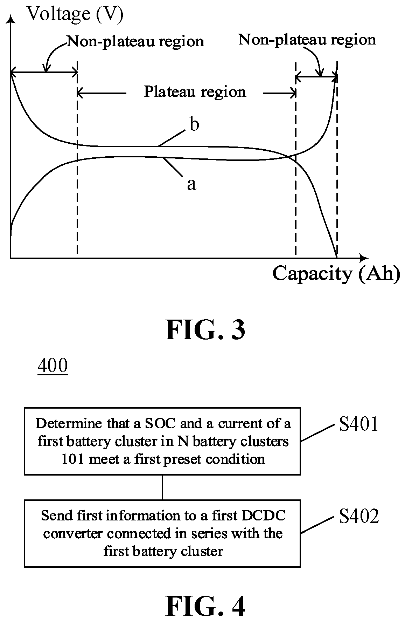

Fig. 3 is a schematic diagram of a charging/discharging curve to which embodiments of the present application are applicable.

The charging/discharging process of the battery cluster 101 in the battery system 100 will be described below with reference to Fig. 3. As shown in Fig. 3, curve a is the charging curve of the battery cluster 101, and curve b is the discharging curve of the battery cluster 101. During the charging process, the voltage of the battery cluster 101 first rapidly rises to a stable voltage, and the stable voltage is related to the equilibrium potential of the battery. After the battery cluster 101 being continuously charged to a certain capacity at this stable voltage, the voltage continues to rise rapidly. Once the voltage reaches a cut-off voltage, charging of the battery cluster 101 needs to be stopped, otherwise it will be overcharged and causes safety problems. During the discharging process, the voltage of the battery cluster 101 first drops to a stable voltage, then continuously discharge at this stable voltage to supply power to the outside, after discharging to a certain capacity, the voltage continues to decrease rapidly, and the discharge is stopped after reaching a cut-off condition. Thus, it can be seen that during the charging and discharging process of the battery cluster 101, both experience a phase in which the voltage is stable, this phase is referred to as plateau region, and the beginning and end of the charge/discharge are referred to as non-plateau regions. It should be noted that, although the non-plateau region may refer to both the beginning of charge/discharge and the end of charge/discharge, the non-plateau region in the embodiment of the present application is described with respect to the end of charge/discharge. Therefore, the non-plateau region in the embodiment of the present application refers to non-plateau region of the end of charge/discharge.

As an energy storage system, the battery system 100 needs to operate at a stable voltage. It can be seen from Fig. 3 that the longer the plateau region of the battery cluster 101 is, the more electric power that can be used from the battery system. Therefore, in order to improve the capacity utilization of the battery system as much as possible, DCDC converters 102 are usually used in the plateau region to adjust the SOCs of the battery clusters 101, by controlling differences between the SOCs of different battery clusters 101 in the battery system 100, the battery clusters 101 in the battery system 100 are enabled to reach the non-plateau region as simultaneously as possible. However, there is always a difference between the expected value of SOC and the actual achievable value of SOC, that is, the accuracy of SOC-based adjustment strategy is limited, and it is prone to fail; in addition, in the non-plateau region at the end of charge/discharge, the voltage changes rapidly but there is still some capacity before reaching the cut-off voltage, which is usually not utilized. In particular, when the SOC-based adjustment strategy fails, in the battery system 100, a part of battery clusters 101 entering the non-plateau region prematurely will reach the cut-off condition prematurely, resulting in the voltage of other battery clusters 101 that have not entered the non-plateau region change sharply and enter the non-plateau region prematurely as well, which causes great waste of capacity.

Fig. 4 is a schematic flowchart of a control method 400 of a battery system 100 according to an embodiment of the present application.

As shown in Fig. 4, the control method 400 is executed by a main control unit 105 connected with the battery system 100, including:
S401: Determining that an SOC and a current of a first battery cluster in the N battery clusters 101 meet a first preset condition, and
S402: Sending first information to a first DCDC converter connected in series with the first battery cluster.
wherein the first preset condition includes: the SOC of the first battery cluster is greater than a first threshold, and the current I₁ of the first battery cluster is greater than a second threshold or less than a third threshold; or, the SOC of the first battery cluster is less than a fourth threshold, and a current I₁ of the first battery cluster is greater than a second threshold or less than a third threshold, wherein the second threshold is set according to a maximum permissible current of the first battery cluster, and the third threshold is set according to an average current of the N battery clusters 101. The first information is used to instruct controlling the current of the first battery cluster to reach a first preset current.

Specifically, the first threshold and the fourth threshold may be set according to the value of corresponding SOC of the battery cluster 101 at the end of the plateau region. For example, the first threshold may be 80%, 85%, 90%, or the like, and the second threshold may be 20%, 15%, 10%, or the like. The SOC of the first battery cluster being greater than the first threshold or less than the fourth threshold means that the first battery cluster enters the non-plateau region, in other words, the first battery cluster reaches the end of charge/discharge. In addition, the second threshold is set according to the maximum permissible current Iₘₐₓ₁ of the first battery cluster, and the maximum permissible current Iₘₐₓ₁ of the first battery cluster is the maximum current that can pass through the circuit where the first battery cluster is located, exceeding this current will cause damage to the apparatus of the first battery cluster. For example, the second threshold value may be 0.8Iₘₐₓ₁, 0.85Iₘₐₓ₁, 0.9Iₘₐₓ₁, 0.95Iₘₐₓ₁, or the like. The third threshold is set according to the average current I_{avg} of the N battery clusters 101. If the difference between the current of the first battery cluster and the average current is too large, it means that the current I₁ of the first battery cluster has been changed rapidly, and the cut-off condition is prone to be reached prematurely. For example, the third threshold may be 0.8I_{avg}, 0.85I_{avg}, 0.9I_{avg}, 0.95I_{avg}, or the like. In general, the first preset condition is that the charge/discharge of the first battery cluster enters the non-plateau region and current I₁ of the first battery cluster is abnormal.

After determining that the first battery cluster meets the first preset condition, the main control unit 105 sends a first information to the first DCDC converter connected in series with the first battery cluster, instructing the first DCDC converter to continue being connected with the circuit at the end of charge/discharge of the first battery cluster and adjust current I₁ of the first battery cluster. At this time, since the loop current between the first battery cluster and other battery clusters 101 is inevitable, the loop current is used to charge the first battery cluster so as to reduce the difference between SOCs of the battery clusters 101. Taking the discharging process as an example, when the first battery cluster meets the first preset condition, the SOC of the first battery cluster is small (less than the fourth threshold), controlling the first battery cluster to reach the first preset current enables the first battery cluster to continue discharging at a relatively small current. Since the output power of the battery system 100 is constant, battery clusters 101 with higher SOCs in the battery system 100 automatically discharge at relatively large current, and at the same time, a loop current is formed between battery clusters 101 with higher SOCs and the first battery cluster, so that the SOCs thereof tends to be gradually equalized. The control principle of the charging process is similar and will not be described again. Thus, the battery capacity at the end of charge/discharge can be fully utilized.

In this embodiment, at the non-plateau region of charge/discharge of the battery cluster 101, the loop current between the battery clusters 101 is used to equalize the SOCs of different battery clusters 101, by controlling current I₁ of the first battery cluster to reach the first preset current, the first battery cluster can be prevented from entering the non-plateau region prematurely and being disconnected due to reaching the cut-off condition, so that the constant power duration of the battery system 100 is increased, and the capacity of the battery clusters 101 at the end of charge/discharge is fully utilized, thereby improving the capacity utilization of the battery system 100.

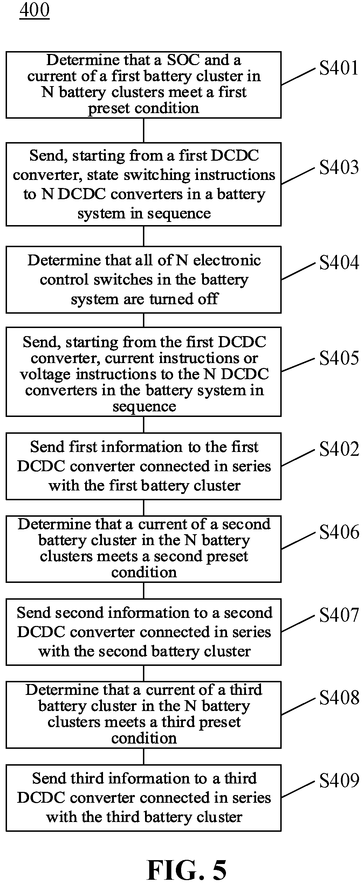

Fig. 5 is another schematic flowchart of a control method 400 of a battery system 100 according to an embodiment of the present application.

Optionally, as shown in Fig. 5, before sending the first information to the first DCDC converter connected in series with the first battery cluster, the control method 400 further includes:
S403. Sending, starting from the first DCDC converter, state switching instructions to the N DCDC converters 102 in the battery system 100 in sequence, wherein the state switching instruction is used to instruct controlling the N electronic control switches 107 connected in parallel with the N DCDC converters 102 to be turned off.

Specifically, if the DCDC converters 102 are always connected with the circuit, a large amount of power will be consumed, therefore, the DCDC converters 102 are usually connected to the circuit only when the battery clusters 101 need to be regulated. Since the SOC-based adjustment strategy is carried out in the plateau region of charge/discharge, in the non-plateau region of charge/discharge, the DCDC converters 102 are usually not connected to circuit.

After determining that the first battery cluster meets the first preset condition, the main control unit 105 sequentially sends state switching instructions to the DCDC converters 102 in the battery system 100 starting from the first DCDC converter, so that all the DCDC converters 102 are connected to the circuit, thereby being able to regulate the battery clusters 101 according to other instructions.

In the embodiment of the present application, on one hand, before adjusting current I₁ of the first battery cluster, the main control unit 105 connecting all the DCDC converters 102 in the battery system 100 to the circuit by sending the first information, so that the battery system 100 is in a regulatable state, being capable of receiving and responding to the current or the voltage instruction in time; on the other hand, the main control unit 105 sending the first information sequentially, so that the DCDC converters 102 in the battery system 100 being sequentially connected to the circuit, which helps to alleviate circuit oscillation caused by connecting a plurality of DCDC converters 102 to the circuit at the same time, and helps to improve stability of the battery system 100.

Optionally, as shown in Fig. 5, before sending the first information to the first DCDC converter connected in series with the first battery cluster, the control method 400 further includes:
S404, confirming that all of the N electronic control switches 107 in the battery system 100 are turned off.

Specifically, the DCDC converter 102 may send state feedback information to the main control unit 105, the state feedback information is used to indicate that the electronic control switch 107 is turned off, that is, indicate that the DCDC converter 102 is connected to the circuit. After receiving the state feedback information, the main control unit 105 determines that all of the N electronic control switches 107 in the battery system 100 are turned off. In other words, the main control unit 105 determines that all of the DCDC converters 102 in the battery system 100 are connected to the circuit.

In this embodiment, after receiving the state feedback information from all the DCDC converters 102, the main control unit 105 firstly confirms that all the DCDC converters 102 in the battery system 100 are connected to the circuit, and then sends the first information to the first battery cluster. The confirmation process helps to reduce conflict between the first information and the state switching instructions, and helps to improve the software stability of the battery system 100.

Optionally, as shown in Fig. 5, before sending the first information to the first DCDC converter connected in series with the first battery cluster, the control method 400 further includes:
S405. Sending, starting from the first DCDC converter, current instructions or voltage instructions to the N DCDC converters 102 in the battery system 100 in sequence.
wherein the current instructions are used to indicate the target currents of the N battery clusters 101 corresponding to the N DCDC converters 102, and the voltage instructions are used to indicate the target voltages of the N battery clusters 101 corresponding to the N DCDC converters 102. The main control unit 105 may send the voltage instructions or the current instructions after sending the state switching instructions to the DCDC converters 102, or may send the voltage instructions or the current instructions while sending the state switching instructions. The main control unit 105 may control, by sending the voltage or the current instructions, the current or voltage of each battery cluster 101 in the battery system 100 after the first battery cluster enters the non-plateau region, for example, enable all the battery clusters 101 to maintain the current voltages or currents; for another example, enable all the battery clusters 101 to operate at a minimum voltage that does not affect the power of the battery system 100.

In this embodiment, before regulating current I₁ of the first battery cluster, the main control unit 105 enables the voltages or the currents of all the battery clusters 101 to be in a regulatable state by using the current instructions or the voltage instructions, thereby ensuring normal operation of subsequent current adjustment step.

Optionally, as shown in Fig. 5, the control method 400 further includes:
S406: Determining that the current I₂ of the second battery cluster in the N battery clusters 101 meets a second preset condition.
S407: Sending second information to the second DCDC converter connected in series with the second battery cluster. The second information is used to instruct controlling the current I₂ of the second battery cluster to reach the second preset current.
wherein the second preset condition includes: a ratio of current I₂ of the second battery cluster to the average current I_{avg} of the N battery clusters 101 I₂/I_{avg} is less than a fifth threshold, or, a ratio of the current of the second battery cluster to the average current I_{avg} of the N battery clusters 101 I₂/I_{avg} is greater than a sixth threshold.

Specifically, I₂/I_{avg} represents a degree of deviation between current I₂ of the second battery cluster and the average current I_{avg}, which can indirectly reflect a degree of deviation between current I₂ of the second battery cluster and currents of other battery clusters 101. The main control unit 105 adjusts the current of the second battery cluster by sending the second information to the second DCDC converter when current I₂ of the second battery cluster deviates greatly from the currents of other battery clusters 101. In addition, by setting the fifth threshold and the sixth threshold, the deviation between current I₂ of the second battery cluster and the currents of other battery clusters 101 can be controlled, so as to control the magnitude of the loop current among the clusters, thereby avoiding circuit interruption due to the loop current exceeding the range that the circuit can withstand, or avoiding a situation in which some pf the battery clusters 101 in the battery system 100 reach the cut-off condition prematurely due to excessive loop current or excessive current variation of the battery clusters 101. The fifth threshold may be a value less than 100%, such as 95%, 90%, 85%, 80%, etc., and the sixth threshold may be a value greater than 100%, such as 105%, 110%, 115%, 120%, etc.

In this embodiment, by monitoring and adjusting the difference between the current of each battery cluster 101 in the battery system 100 and the average current I_{avg} in time, the current difference between each of the battery clusters 101 can be controlled indirectly, thereby effectively avoiding a situation in which the circuit being damaged due to excessive loop current caused by the current difference between the battery clusters 101 is too large or some of the battery clusters 101 reach the cut-off condition prematurely due to the current difference between clusters is too large. In this way, the capacity of the battery system 100 at the end of charge/discharge can be fully utilized so as to improve the capacity utilization of the battery system 100.

Optionally, as shown in Fig. 5, the control method 400 further includes:
S408. Determining that the current of a third battery cluster in the N battery clusters 101 meets a third preset condition.
S409: Sending third information to a third DCDC converter connected in series with the third battery cluster. The third information is used to instruct controlling the current of the third battery cluster to reach the third preset current.
wherein the third preset condition includes: the current of the third battery cluster is greater than a seventh threshold, wherein the seventh threshold is set according to a maximum permissible current Iₘₐₓ₃ of the third battery cluster, a maximum charging current I_{c3} of the third battery cluster, or a maximum discharging current I_{dis3} of the third battery cluster.

Specifically, when the capacity of the battery system 100 at the end of charge/discharge is utilized, in addition to monitoring the difference between the current of each battery cluster 101, it is necessary to monitor the relationship between the current of each battery cluster 101 and the maximum permissible current of the battery cluster 101, the permissible discharging current and the permissible charging current of the battery clusters. The maximum permissible current Iₘₐₓ of the battery cluster 101 refers to the maximum current that can pass through the circuit where the battery cluster 101 is located, the discharging current I_{dis} of the battery cluster 101 refers to the current that the battery cluster 101 can discharge stably, and the charging current I_{c} of the battery cluster 101 refers to the current that the battery cluster 101 can charge stably. The seventh threshold is set according to Iₘₐₓ, I_{dis} and I_{c} of the third battery cluster, that is, according to Iₘₐₓ₃, I_{dis3} and I_{c3}. For example, the seventh threshold is the minimum value among Iₘₐₓ, I_{dis} and I_{c}. For another example, the seventh threshold is 90 % of the minimum value among Iₘₐₓ, I_{dis} and I_{c}. When the current of the third battery cluster in the battery system 100 is greater than the upper limit of the circuit and the battery, the third information is sent to the third DCDC converter to adjust the current of the third battery cluster in time.

In this embodiment, by monitoring whether the current of each battery cluster 101 in the battery system 100 exceeds the limit that the circuit and the battery can withstand and adjusting same in time, it can effectively avoid the situation in which the circuit and the battery being damaged or the battery cluster 101 reaching the cut-off condition prematurely due to an excessive current of a certain battery cluster 101 in the battery system 100 at the end of charge/discharge, thereby improving the safety of the battery system 100 and further improving the capacity utilization of the battery system 100.

Optionally, in S403, sending state switching instructions to the N DCDC converters 102 in the battery system in sequence includes: sequentially sending the state switching instructions to corresponding N DCDC converters 102 in the battery system in sequence in an ascending order according to current magnitudes of the N battery clusters 101.

Optionally, in S403, sending state switching instructions to the N DCDC converters 102 in the battery system in sequence includes: sending the state switching instructions to the corresponding N DCDC converters 102 in the battery system in sequence in a descending order according to the current magnitudes of the N battery clusters 101.

Optionally, in S403, the main control unit 105 sequentially sends N pieces of the first information at an interval of a first period. For example, the first period is 100 ms. That is, the main control unit 105 sequentially sends the first information to the N battery clusters 101 at an interval of 100 ms.

Optionally, in S405, sending the current instructions or the voltage instructions to the N DCDC converters 102 in the battery system 100 in sequence includes: sending the current instructions or the voltage instructions to corresponding N DCDC converters 102 in the battery system 100 in sequence in an ascending order according to current magnitudes of the N battery clusters 101.

Optionally, in S405, sending the current instructions or the voltage instructions to the N DCDC converters 102 in the battery system 100 in sequence includes: sending the current instructions or the voltage instructions to corresponding N DCDC converters 102 in the battery system 100 in sequence in a descending order according to the current magnitudes of the N battery clusters 101.

Specifically, at the end of discharge, the current of the first battery cluster that entering the non-plateau region is highly likely to be less than the currents of other battery clusters 101 in the battery system 100. In this case, sequentially sending the state switching instruction and the current instruction, or the state switching instruction and the voltage instruction to the corresponding DCDC converter 102 in an ascending order of the current magnitude, so that the battery cluster 101 that is prone to abnormality can enter the regulated state earlier, while other battery clusters 101 enter the regulated state after continue discharging for a period of time, thereby improving stability and capacity utilization of the battery system 100 at the end of charge/discharge; similarly, at the end of charge, the current of the first battery cluster that entering the non-plateau region is highly likely to be greater than the currents of other battery clusters 101. In this case, the state switching instruction and the current instruction, or the state switching instruction and the voltage instruction may be sequentially sent in descending order of current magnitudes.

In this embodiment, sequentially connecting corresponding DCDC converter 102 to the circuit in an ascending order or a descending order according to current magnitudes of the battery clusters 101 in the battery system 100 so as to adjust the current or voltage of the battery clusters 101, so that the battery cluster 101 with the current closer to the cut-off condition is preferentially connected to the DCDC converter 102 and being regulated, and the remaining battery clusters 101 can be connected to the DCDC converters 102 after continue charging/discharging for a period of time, thereby improving the stability of the battery system 100 while making full use of the capacity at the end of charge/discharge, and improving the capacity utilization of the battery system 100.

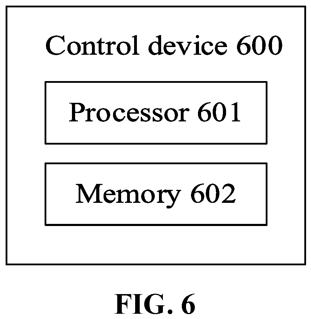

Fig. 6 is a schematic structural diagram of a control device 600 of the battery system 100 according to an embodiment of the present application. As shown in Fig. 6, the control device 600 includes a processor 601 and a memory 602, the memory 602 stores computer program instructions. The processor 601 executes the computer program instructions to implement the control method 400 in the foregoing embodiments of the present application.

Optionally, the processor 601 may be a central processing unit (CPU), or may be other general-purpose processor, digital signal processor (DSP), application specific integrated circuit (ASIC), field-programmable gate array (FPGA) or other programmable logic device, discrete gate or transistor logic apparatus, discrete hardware components, or the like. The general-purpose processor may be a microprocessor or the processor may be any conventional processor or the like.

Optionally, the memory 602 may be one or more read-only memories (ROM), random access memories (RAM), flash memories, or the like. The memory 602 may be an external storage device such as static random access memory (SRAM), dynamic random access memory (DRAM), or pseudo-static random access memory (PSRAM).

The present application further provides a battery system, the battery system includes, for example, N battery clusters connected in parallel, a DCDC converter connected in series with each of the battery clusters, and a control device 600.

In addition, an embodiment of the present application further provides a computer storage medium. The computer storage medium stores computer program instructions, the control method 400 according to various embodiments of the present application may be implemented by executing the computer program instructions.

A person of ordinary skill in the art may be aware that, the units in the examples described with reference to the embodiments disclosed herein can be implemented by electronic hardware, computer software, or a combination thereof. To clearly illustrate the interchangeability between hardware and software, the combinations and steps of the examples have been generally described in the foregoing descriptions according to functions. Whether these functions are performed in hardware or software depends on a specific application and a design constraint condition of the technical solution. Those skilled in the art may implement the described functions using different methods for each particular application, but such implementations should not be considered beyond the scope of the present application.

In the several examples provided in the present application, it should be understood that the disclosed system and apparatus may be implemented in other manners. For example, the apparatus example described above is only illustrative. For example, the division of the units is only a logical function division. In an actual implementation, there may be other division methods. For example, a plurality of units or components may be combined or may be integrated into another system, or some features may be ignored, or not implemented. In addition, the shown or discussed mutual coupling or direct coupling or communication connection may be indirect coupling or communication connection through some interfaces, apparatuses, or units, and may be in electrical, mechanical, or other forms of connection.

The units described as separate components may or may not be physically separated, and components displayed as units may or may not be physical units, that is, may be located in one place, or may be distributed to a plurality of network units. Some or all of the units may be selected based on actual requirements to achieve the objectives of the solutions of the embodiments of the present application.

In addition, function units in the embodiments of the present application may be integrated into one processing unit, or each of the units may exist alone physically, or two or more units may be integrated into one unit. The integrated unit may be implemented in the form of hardware, or in the form of a software function unit.

When the integrated unit is implemented in a form of a software functional unit and sold or used as an independent product, and may be stored in a computer-readable storage medium. Based on such an understanding, the technical solutions of the present application essentially, or the part that contributing to the prior art, or all or part of the technical solutions may be embodied in a form of a software product. The computer software product is stored in a storage medium and includes several instructions for instructing a computer device (may be a personal computer, a server, a network device, or the like) to perform all or some of the steps of the methods described in the embodiments of the present application. The foregoing computer storage medium includes any medium that can store program code, for example, a USB flash disk, a removable hard disk, a read-only memory (ROM), a random access memory (RAM), a magnetic disk, or an optical disk.

It should be understood that the specific examples herein are intended only to assist those skilled in the art to better understand the embodiments of the present application and are not intended to limit the scope of the embodiments of the present application.

It should also be understood that in various embodiments of the present application, the serial number of each process does not mean the sequence of execution, and the execution sequence of each process should be determined by its function and internal logic, and should not constitute any limitation on the implementation process of the embodiments of the present application.

It should be further understood that various implementations described in this specification may be implemented alone or in combination, and this is not limited in this embodiment of the present application.

While the present application has been described with reference to the preferred embodiments, various modifications may be made and components therein may be replaced with equivalents without departing from the scope of the present application. In particular, the technical features mentioned in the various examples can be combined in any manner as long as there is no structural conflict. The present application is not limited to the specific embodiments disclosed herein, but rather includes all technical solutions falling within the scope of the claims.

## Claims

1. A control method for a battery system, wherein the battery system comprises N battery clusters connected in parallel, each of the battery clusters has a DCDC converter connected in series therewith, and the method comprises:
determining that a state of charge (SOC) and a current of a first battery cluster in the N battery clusters meet a first preset condition, the first preset condition comprising: the SOC of the first battery cluster is greater than a first threshold and the current of the first battery cluster is greater than a second threshold or less than a third threshold; or, the SOC of the first battery cluster is less than a fourth threshold and the current of the first battery cluster is greater than the second threshold or less than the third threshold, wherein the second threshold is set according to a maximum permissible current of the first battery cluster, and the third threshold is set according to an average current of the N battery clusters; and
sending first information to a first DCDC converter connected in series with the first battery cluster, the first information being used to instruct controlling the current of the first battery cluster to reach a first preset current.

2. The method according to claim 1, wherein before sending the first information to the first DCDC converter connected in series with the first battery cluster, the method further comprises:
sending, starting from the first DCDC converter, state switching instructions to the N DCDC converters in the battery system in sequence, the state switching instructions being used to instruct controlling the N electronic control switches respectively connected in parallel with the N DCDC converters to be turned off.

3. The method according to claim 2, wherein before sending the first information to the first DCDC converter connected in series with the first battery cluster, the method further comprises:
confirming that all the N electronic control switches in the battery system are turned off.

4. The method according to claim 1, wherein before sending the first information to the first DCDC converter connected in series with the first battery cluster, the method further comprises:
sending, starting from the first DCDC converter, current instructions or voltage instructions to the N DCDC converters in the battery system in sequence, the current instructions being used to indicate target currents of the N battery clusters corresponding to the N DCDC converters, and the voltage instructions being used to indicate target voltages of the N battery clusters corresponding to the N DCDC converters.

5. The method according to any one of claims 1 to 4, wherein the method further comprises:
determining that a current of a second battery cluster in the N battery clusters meets a second preset condition, the second preset condition comprising: a ratio of the current of the second battery cluster to the average current of the N battery clusters is less than a fifth threshold, or, a ratio of the current of the second battery cluster to the average current of the N battery clusters is greater than a sixth threshold; and
sending second information to a second DCDC converter connected in series with the second battery cluster, the second information being used to instruct controlling the current of the second battery cluster to reach a second preset current.

6. The method according to any one of claims 1 to 4, wherein the method further comprises:
determining that a current of a third battery cluster in the N battery clusters meets a third preset condition, the third preset condition comprising: the current of the third battery cluster is greater than a seventh threshold, wherein the seventh threshold is set according to a maximum permissible current of the third battery cluster, a maximum charging current of the third battery cluster, or a maximum discharging current of the third battery cluster; and
sending third information to a third DCDC converter connected in series with the third battery cluster, the third information being used to instruct controlling the current of the third battery cluster to reach a third preset current.

7. The method according to claim 2 or 3, wherein the sending state switching instructions to the N DCDC converters in the battery system in sequence comprises:
sending the state switching instructions to the corresponding N DCDC converters in the battery system in sequence in an ascending order according to current magnitudes of the N battery clusters.

8. The method according to claim 2 or 3, wherein the sending state switching instructions to the N DCDC converters in the battery system in sequence comprises:
sending the state switching instructions to the corresponding N DCDC converters in the battery system in sequence in a descending order according to the current magnitudes of the N battery clusters.

9. The method according to claim 4, wherein the sending current instructions or voltage instructions to the N DCDC converters in the battery system in sequence comprises:
sending the current instructions or the voltage instructions to the corresponding N DCDC converters in the battery system in sequence in an ascending order according to current magnitudes of the N battery clusters.

10. The method according to claim 4, wherein the sending current instructions or voltage instructions to the N DCDC converters in the battery system in sequence comprises:
sending the current instructions or the voltage instructions to the corresponding N DCDC converters in the battery system in sequence in sequence in a descending order according to the current magnitudes of the N battery clusters.

11. The method according to any one of claims 1 to 10, wherein the battery system further comprises a state acquisition unit, and the method further comprises:
receiving SOCs and currents of the N battery clusters sent by the state acquisition unit.

12. A control device for a battery system, wherein the control device for a battery system comprises: a processor and a memory storing computer program instructions;
wherein the processor implements the control method for a battery system according to any one of claims 1 to 11 when executing the computer program instructions.

13. A battery system, wherein the battery system comprises: N battery clusters connected in parallel, a DCDC converter connected in series with each of the battery clusters, and a control device; and the control device is configured to perform the control method for a battery system according to any one of claims 1 to 11.

14. A computer storage medium, wherein the computer storage medium stores computer program instructions, and the control method for a battery system according to any one of claims 1 to 11 is implemented when the computer program instructions are executed.
